# EUROPEAN PATENT APPLICATION

(11) **EP 2 957 801 A1**
(43) Date of publication of application: **23.12.2015**
(21) Application number: 14173022.6
(22) Date of filing: 18.06.2014
(51) Int. Cl.: F16K 31/50, F16K 31/60, F16K 1/04

(54) **Presettable hydraulic valve, in particular for hydraulic manifolds of thermal plants**

(71) Applicant: Far Rubinetterie S.P.A., 28024 Gozzano (NO) (IT)
(72) Inventor: Allesina, Guerrino, 28024 Gozzano (IT)
(74) Representative: Siniscalco, Fabio

(57) **Abstract**

A presettable hydraulic valve (11) provides a valve body (17) in which is housed a shutter (20) for intercepting the fluid that flows inside the valve (11) and further provides an external knob (26) connected to the shutter (20) in such a manner that a rotation of the knob (26) corresponds to an axial movement of the shutter (20) inside the valve body (17) for adjusting the flowrate; between the valve body (17) and the knob (26) an intermediate component (33) is provided secured axially and rotationally to the valve body (17); to this intermediate component the knob (26) is secured axially in such a manner that the knob (26) can anyway rotate freely. Owing to the intermediate component (33) it is possible to vary the dimensions of the knob (26) without altering the valve body (17).

## Description

### BACKGROUND OF THE INVENTION

This invention relates to a presettable hydraulic valve, i.e. a valve for adjusting the flowrate of fluid that can be preset, that is in particular suitable for being fitted to hydraulic manifolds of thermal plants.

### PRIOR ART

Hydraulic manifolds for thermal plants are known that are used to distribute thermovector fluid to the various heat-exchanging units or to collect thermovector fluid coming from the various heat-exchanging units.

Such manifolds comprise a main conduit along which a series of presettable hydraulic valves are arranged, each of which is connected to a respective thermal unit through a respective offtake conduit.

Each valve provides a valve body that is inserted into a seat of the main conduit. In the valve body a shutter is housed that intercepts the thermovector fluid that flows between the main conduit and the respective offtake conduit of the valve so as to adjust the flowrate of fluid flowing in this direction.

The shutter is driven by an external cylindrical knob of the valve through a control shank. One rotation of the knob corresponds to one axial movement of the control shank and thus of the shutter inside the valve body for adjusting the flowrate.

Normally, in manifolds each valve is preset at a set value corresponding to a preset flowrate of thermal fluid relating to the thermal unit to which the valve is assigned.

Once this valve has been preset, in order to avoid tampering, the knob is protected by a cap that is pressure-fitted to the knob and rotates freely thereupon so as not to permit rotation thereof.

This system enables valves to be preset without using particular tools so as to make this possible even in small spaces.

If for technical reasons it is necessary to produce a manifold with knobs of different dimensions, for example with a larger diameter to achieve more accurate presetting, this constitutes a problem.

In fact, a dimensional increase of the knob entails a corresponding dimensional increase of at least one part of the valve body, complicating the production lines and increasing production costs. This is all aggravated by the fact that the valve body is made of metal, in particular brass, which has a high unit cost and has to be machined by numerically controlled machine tools.

### OBJECT OF THE INVENTION

The object of the present invention is to propose a presettable hydraulic valve, in particular for hydraulic manifolds of thermal plants, which is able to solve the aforesaid problem.

### BRIEF DESCRIPTION OF THE INVENTION

This object is achieved by a presettable hydraulic valve in accordance with what is claimed in the claim 1.

### BRIEF DESCRIPTION OF THE DRAWINGS

In order to understand the invention better, a description is given of an embodiment thereof by way of example illustrated in the attached drawings in which:
fig.1 is a longitudinal view of a hydraulic manifold using two hydraulic valves according to the invention;
fig.2 is a top view of the manifold in fig.1;
fig.3 is a cross section of the manifold of fig.1 along one of the valves according to the invention;
fig.4 shows in an exploded perspective view two components of the valve according to the invention;
figs 5,6,7,8,9,10 show respectively in a perspective view, in a top view, and in four different side views, one of the two components of fig.4;
figs 11,12 show respectively in a cross section and in a partial longitudinal view the manifold of fig. 1 with the valve according to the invention without the two components of fig.4;
figs 13,14,15 show respectively in a perspective partial view, in a top view, and in cross section the manifold of the figs 11,12 with the component of the figs 5-10 mounted.

### DETAILED DESCRIPTION OF THE INVENTION

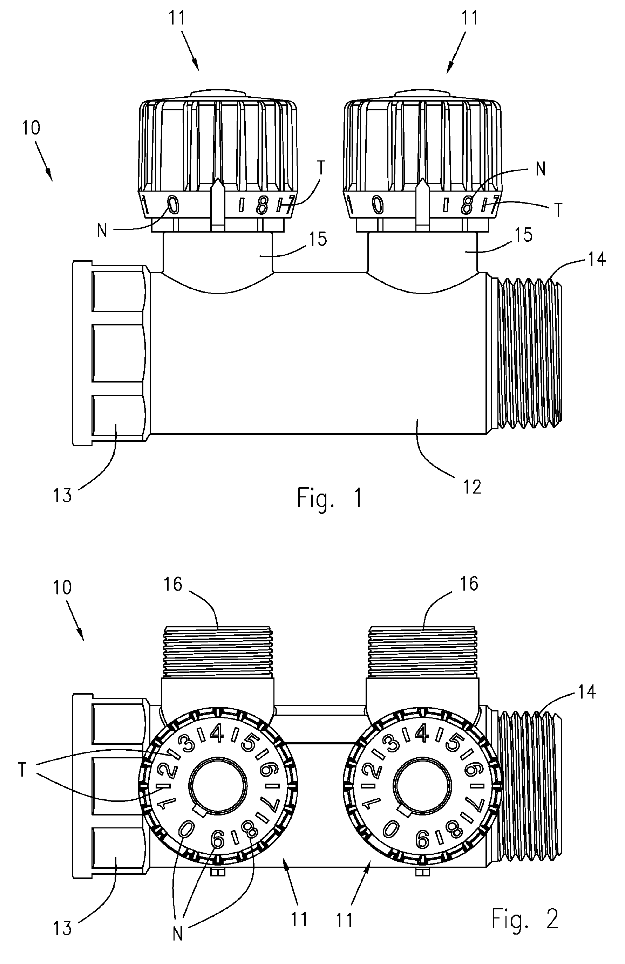

The manifold illustrated in figs1, 2 is indicated generically with 10 and the two valves used therein are generically indicated by 11.

The manifold 10 has a longitudinal conduit 12 ending with two threaded connections 13 and 14.

From the conduit 12 two seats 15 branch out upperly, each of which is intended for receiving a respective valve 11, and two connectors 16 branch out laterally, each at a respective valve 11.

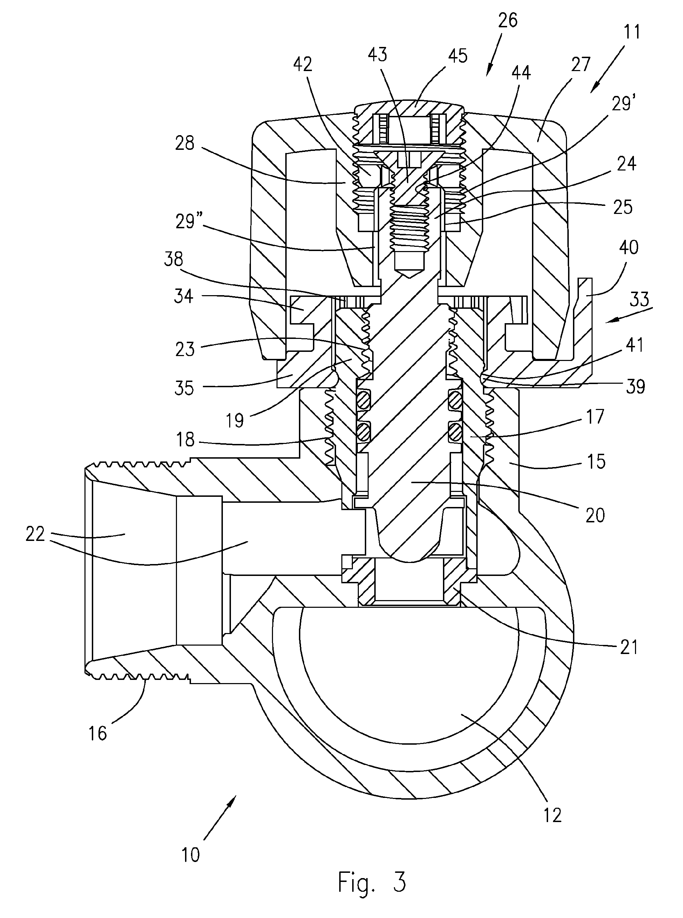

In fig. 3 the details of one of the two valves 11 are shown in section.

Each valve 11 has a valve body 17 that is fixed by a screw coupling 18 inside the seat 15. The body 17 is provided with a hexagonal head 19 that is used for fixing the valve body 17 to the seat 15 by a suitable tool, and remains outside the seat 15 once the valve body 17 is fixed. Inside the valve body 17 a shutter 20 is mounted that cooperates with a seal seat 21 mounted inside the manifold 10 for adjusting the flowrate of fluid that flows between the conduit 12 and a transverse conduit 22 that terminates at the side connection 16. The shutter 20 is secured to the valve body 17 by a screw coupling 23 and is provided with a shank 24 that extends outside the valve body 17. The shank 24 is provided with longitudinal toothing 25.

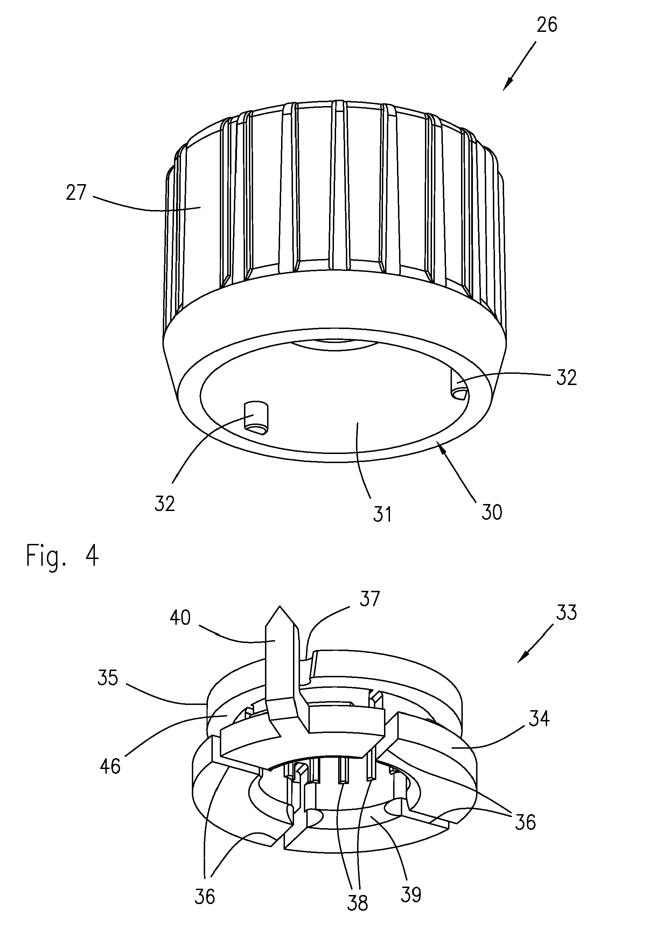

The shutter 20 is driven by a knob 26 that is mounted on the valve body 17 with an interposed intermediate ring 33. The knob 26 and the intermediate ring 33 are shown in fig. 4.

With reference to figs 3,4, the knob 26 consists of a hollow cylindrical body 27 in which an axial bush 28 is formed internally of one piece having internally in succession a thread 29' and longitudinal toothing 29". The knob 26 has a lower opening 30 at which inside the cylindrical wall 31 of the body 27 three longitudinal ridges 32 are obtained that are arranged asymmetrically in a circumferential direction. On the upper face of the knob 26 a consecutive series of reference numbers N is provided with reference notches T at intervals, and likewise along a lower annular zone of the knob 26 an identical consecutive series of reference numbers N is provided with reference notches T at intervals.

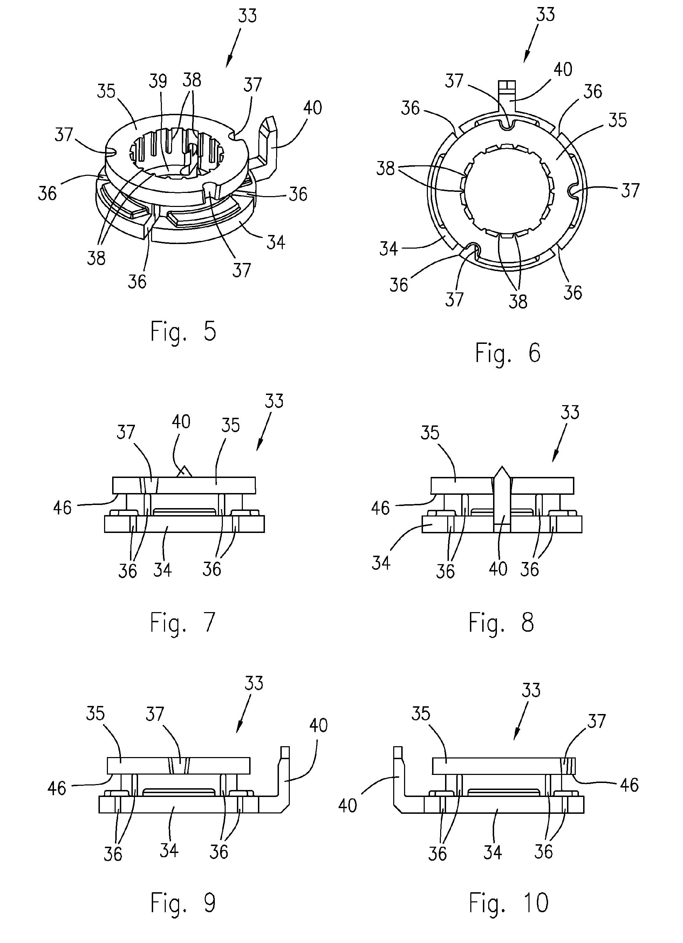

The intermediate ring 33 is shown in detail in figs 5-10. The ring 33 consists of an annular lower connection 34 portion with an L section and of annular upper connection 35 portion. The lower connection 34 portion has a minimum diameter that is lower and a maximum diameter that is higher than the diameter of the annular upper connection 35 portion. In the lower connection 34 portion four longitudinal cuts 36 are obtained arranged symmetrically in a circumferential direction. The upper connection 35 portion has slight conicity facing downwards and in which three external longitudinal hollows 37 are obtained, arranged asymmetrically in a circumferential direction, intended for coupling with the three internal longitudinal ridges 32 of the body 27 of the knob 26. Inside the ring 33 a series is obtained of longitudinal ribs 38 that are arranged symmetrically in a circumferential direction and an annular ridge 39 is further obtained. From the lower connection 34 portion an L-shaped element 40 extends as a piece directed upwards, having the function of an indicator.

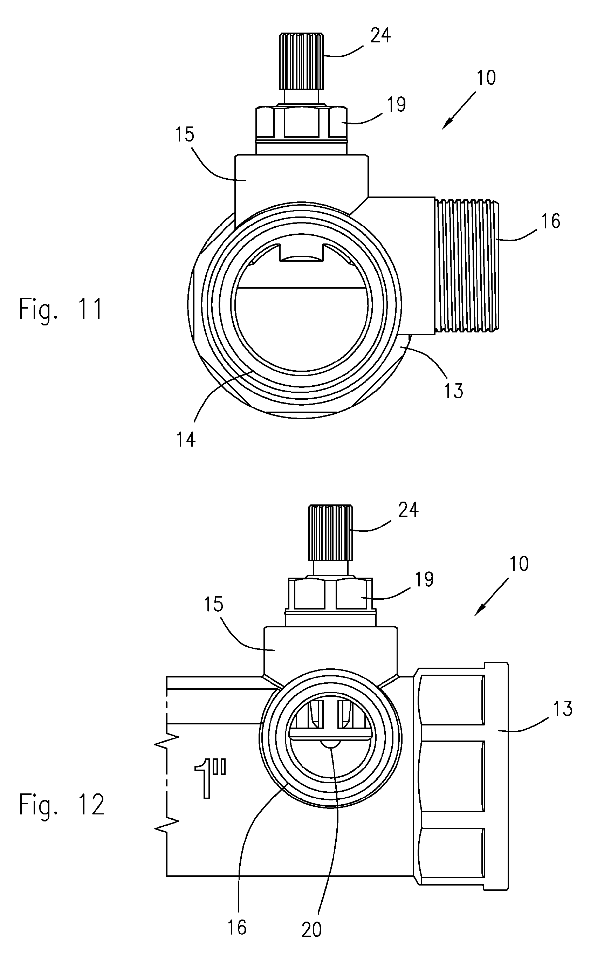

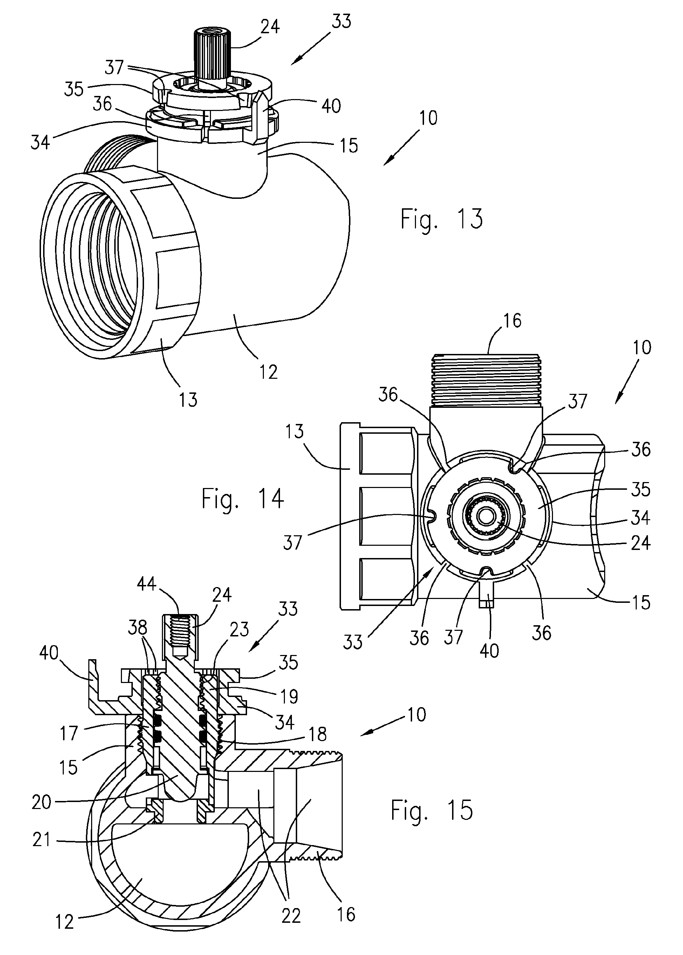

With reference to figs 11-15, in the assembly of the manifold 10 on the valve body 17 the intermediate ring 33 is first mounted. The ring 33 is placed on the hexagonal head 19 of the valve body 17 until the annular ridge 39 snaps elastically inside annular recess 41, indicated in fig. 3, below the hexagonal head 19. The cuts 36 permit elastic dilation of the ring 33 enabling the aforesaid elastic snap connection of the ridge 39 in the recess 41. The ring 33 is thus anchored to the valve body 17. The longitudinal internal ribs 38 of the ring 33 engage with the hexagonal head 19 to prevent the ring 33 rotating with respect to the valve body 17.

Subsequently, the knob 26 is mounted on the ring 33, as illustrated with reference to figs 3, 4. For fitting, the longitudinal internal ridges 32 of the knob 26 are fitted at the external longitudinal hollows 37 of the ring 33 and in this position the knob 26 is forced on the ring 33 until the ridges 32 exceed the hollows 37 and the lower edge of the knob 26 abuts against the lower annular portion 34 of the ring 33. This position corresponds to the adjusting position "0" of the knob. The knob 26 is free to rotate on the ring 33 in all the other adjusting positions. The slight conicity of the annular upper connection 35 portion prevents the knob 26 from taking out in the aforesaid position "0", whereas in all the other positions the greater diameter of the annular upper connection 35 portion with respect to the lower diameter of the lower annular portion 34 creates a step 46 against which the ridges 32 of the knob 26 abut, preventing the knob from taking out. In fitting the knob 26, the internal longitudinal toothing 29" of the internal bush 28 of the knob 26 couples with the longitudinal toothing 25 of the shank 24 of the shutter 20, in such a manner that the knob 26 and the shutter 20 move integrally in rotation.

With reference to fig.3, the operation of the valve 11 is as follows.

Rotating the knob 26 also rotates the shutter 20, because they are integral in rotation rotate together, and owing to the screw coupling between the valve body 17 and the shutter 20 there is one axial movement of the shutter 20 that enables the flowrate of fluid between the conduit 12 and the transverse conduit 22 to be adjusted. By means of the indicating element 33, the reference numbers N and reference notches T it is possible to display the approximate value of the adjustment made.

It is possible to limit the stroke of the knob 26 to the set adjusting value. For this purpose, as illustrated in fig.3, a washer 42 threaded externally is used that is screwed in the thread 29' of the bush 28 of the knob 26 until the washer 42 abuts against the end of the shank 24 of the shutter 20. When the knob 26 is rotated to close the shutter 20, the shutter 20 moves axially downwards; when the knob 26 is rotated to open the shutter 20, the shutter 20 rotates in the opposite direction, moving axially upwards until the upper end of the shank 24 comes to abut against the washer 42. This abutment position corresponds to the preset adjusting value of the valve 11. It is not possible to go beyond this adjusting value because of the interference between the shank 24 and the washer 42. If it is desired to lock the valve 11 in the preset position, a screw 43 is used that is screwed in a threaded axial blind hole 44 of the shank 24 until the head of the screw 43 abuts against the washer 42; the screw 43 thus prevents any movement of the shank 24 and thus of the shutter 20. A cap 45 is also provided that closes the hole of the thread 29' of the bush 28 of the knob 26.

Owing to the presence of the intermediate ring 33 it is possible to fit knobs 26 of various dimensions without modifying the dimensions and the configuration of the valve body 17 and of the shutter 20. In fact, it is sufficient to modify the external dimensions of the ring 33 to adapt the ring 33 to the internal dimensions of the knob 26.

The production costs of manifolds having valves with knobs of various dimensions are in this manner rather compact, it being required only to modify the external dimensions of the intermediate ring.

In order to decrease costs further, the intermediate ring 33 can be made of plastics.

Fitting the valve 11 is also simple owing to the joints provided. The particular joint with ridges 32 and hollows 37 arranged circumferentially in an asymmetrical manner enables the position "0" of the knob 26 to be identified unequivocally during mounting.

It is clear that there can be variations on and/or additions to what has been disclosed and illustrated.

The configuration of the various illustrated components can be different from what has been disclosed and illustrated provided that the same functionality is achieved.

The manifold can consist of any number of valves like the one disclosed and illustrated.

The numbers and the notches can be arranged only on the upper part of the knob or only along an annular zone of the knob or in other zones of the valve.

The valve can also be used in its own right and not necessarily in the context of the manifolds, or can be used in the contexts of other hydraulic complexes.

## Claims

1. Presettable hydraulic valve (11) comprising a valve body (17) in which is housed a shutter (20) that further intercepts the fluid that flows inside the valve and further comprising an external knob (26) connected to the shutter (20) in such a manner that a rotation of the knob (26) corresponds to an axial movement of the shutter (20) inside the valve body (17) for adjusting the flowrate, **characterised in that** it comprises an intermediate component (33) arranged between the valve body (17) and the knob (26), provided with first means (38,39) for securing axially and rotationally the intermediate component (33) to the valve body (17) and with second means (34,35) for axially securing the knob (26) to the intermediate component (33), permitting free rotation of the knob (26) with respect to the intermediate component (33).

2. Valve according to claim 1, wherein the intermediate component has a ring configuration (33) that is fitted onto the valve body (17) and on which the knob (26) is mounted.

3. Valve according to claim 2, wherein the ring (33) comprises a first annular connecting portion (34) that couples with the valve body (17) and a second annular connecting portion (35) that couples with the knob (26).

4. Valve according to claim 3, wherein in the first connecting portion (34) of the ring (33) longitudinal cuts (36) are obtained to permit diameter dilation of the first connecting portion for coupling with the valve body (17).

5. Valve according to claim 3 or 4, wherein in the second connecting portion (35) of the ring (33) longitudinal hollows (37) are obtained arranged asymmetrically in a circumferential direction and in the knob (26) corresponding longitudinal ridges (32) are obtained internally intended for coupling with the longitudinal hollows (37) of the second connecting portion (35) of the ring (33) for defining an adjusting position "0" of the knob (26), and wherein the ring (33) has an internal step (46) against which the longitudinal ridges (32) of the knob (26) abut to retain axially the knob (26) to the valve body (17) and permit free rotation of the knob (26) with respect to the valve body (17).

6. Valve according to any one of claims 3 to 5, wherein the second annular connecting portion (35) has conicity for forced coupling with the knob (26).

7. Valve according to any one of claims 2 to 6, wherein inside the ring (33) a series of longitudinal ribs (38) is obtained for rotationally locking the ring (33) on the valve body (17) and an annular ridge (39) is obtained that engages with an annular recess (41) of the valve body (17) for axially locking the ring (33) on the valve body (17).

8. Valve according to any one of claims 2 to 6, wherein the ring (33) is provided with an indicating element (40) and the knob (26) is provided with numeric and/or non-numeric reference marks (N,T) to be centred with the indicating element (40) to display the adjusting value of the valve.

9. Valve according to any preceding claim, wherein inside the knob (26) there is an adjustable abutting means (42) against which the shutter (20) abuts in the opening stroke of the valve to define a preset opening limit of the valve.

10. Valve according to claim 9, wherein the adjustable abutting means comprises a washer (42) that is screwable inside the knob (26).

11. Valve according to any preceding claim, wherein fixing means (43) of the shutter (20) in the presetting position of the valve is provided.

12. Valve according to claim 11 as appended to claim 10, wherein the fixing means comprises a screw (43) that tightens in a portion (24) of the shutter (20) and abuts against the washer (42).

13. Hydraulic manifold comprising one or more valves according to any one of claims 1 to 10.
